# EUROPEAN PATENT APPLICATION

(11) **EP 1 426 176 A2**
(43) Date of publication of application: **09.06.2004**
(21) Application number: 03380215.8
(22) Date of filing: 02.10.2003
(51) Int. Cl.: B32B 21/08, B32B 7/02

(54) **Mouldable laminated board**

(30) Priority: 04.12.2002 ES 200202783
(71) Applicant: Lloveras Calvo, Juan, 08182 San Feliu de Codinas (ES)
(72) Inventor: Lloveras Calvo, Juan, 08182 San Feliu de Codinas (ES)
(74) Representative: Esteban Perez-Serrano, Maria Isabel

(57) **Abstract**

The present invention relates to a mouldable laminated board comprising a wooden sheet to which is glued a plastic sheet, whereby the structural and mechanical properties thereof are improved for its subsequent manipulation having better stiffness and less exposure to cracking. Additionally an adhesive can be applied on the face free of the plastic sheet or another sheet of wood or of organic material like paper. Finally and owing to the reduced thickness of the laminated board, offset printing is possible without making use of cardboard or printed Bristol board which covers an expensive material of great visual quality such as wood.

## Description

### OBJECT OF THE INVENTION

The present invention relates to a mouldable laminated board comprising a wooden sheet to which has been glued by conventional means a sheet of plastic material, it being possible finally to mount on said sheet of plastic adhesive means on determined surfaces or another layer of organic material such as for example also wood.

The joining together of a plastic sheet with a wooden sheet provides the latter with a structural stability in its deformation and in its adaptation to any type of surface, allowing at the same time the achievement of an appropriate mechanical behaviour in the event of the stamping and bending.

Additionally, the board behaves well when it is used on a surface whose humidity could spoil the wood mounted for ornamental ends since the plastic sheet isolates it from the contact surface.

Likewise, the reduced thickness of the laminated board allows offset printing without making use of printed cardboard or Bristol boards which cover an expensive material of great visual quality such as wood.

### BACKGROUND OF THE INVENTION

Various laminated boards are known consisting in turn of sheets of different materials.

In general the laminated sheets wherein wood is used as the external sheet and which pursue a structural stability in their formation by means of stamping or shearing, use is made in said laminated boards of at least one sheet of a soft metal like for example aluminium.

Some examples of patents of laminated boards where metallic sheets are used with the object of obtaining greater dimensional stability, are like those disclosed in the patent JP 02238943 or JP 03083632 wherein said sheets of metals are incorporated.

Also known is the French Patent with publication number FR2806960 which discloses a composite laminated board for coating furniture or buildings which comprises a external sheet of wood for ornamental purposes joined by means of adhesive to a thin sheet of metal.

Although all these laminated assemblies offer good characteristics for the manipulation thereof by shearing or stamping, this does not occur when the intention is to perform manufacturing work wherein the objective is to achieve a perfect adaptation of the laminated element to the surface to be covered, that is, where an almost plastic behaviour of the wood is sought.

A problem not resolved satisfactorily is that of bending. When bending, by flexing, the internal fibres (with respect to the radius of curvature) are compressed while the external fibres are in tension.

Solutions are also known wherein use is made of bakelite leafs or others impregnated with phenols which confer better mechanical properties on the final assembly.

Therefore, the objective of the present invention is that of overcoming the above drawbacks by developing for this a laminated board which permits a perfect adaptation of said boards to the surfaces to be covered, wherein the capacity of the wooden boards to bend is increased without their suffering cracking or breaking whatsoever and without their having a structural rigidity which impedes that they be moulded.

If in a laminated board the wood is located on the external part, and especially when the grain of the wood coincides in direction with the line of bending, it does not withstand this traction and splinters, offering a poor finish which is unacceptable when it is intended for objects of value and with clearly aesthetic ends.

These drawbacks are overcome with the present invention.

### DESCRIPTION OF THE INVENTION

The present invention relates to a mouldable laminated board constituted mainly by two sheets, an external one of wood and another of plastic joined to the first by conventional adhesives on the whole surface of the laminated board.

When a plank is subjected to bending, the constituent parts thereof are subjected to different forces. There is a central part precisely on the neutral line, which is not subjected to any stress at all, on the other hand the upper part or that which presents convexity, has its fibres subjected to tension, while the fibres of the inner part are subjected to compression.

Wood through its very nature supports tensile forces very well and works worse in compression, if a plastic sheet is arranged under a thin wooden sheet it is found that on bending said laminated sheet consisting of wood and plastic, the part which is subjected to tension is the upper part, which is of wood and which precisely best supports the tensile forces, while the plastic sheet supports the forces of compression. Also due to the fact that the plastic sheet is joined to the wooden sheet, a better stability of the wooden sheet is achieved since to a certain degree said wooden sheet participates in the characteristics which are provided for it by the plastic sheet, such as offering greater stability when faced with a certain deformation or pressure. That is, since the plastic sheet does not suffer any cracking whatsoever or irrecoverable deformation insofar as the plastic limit is not surpassed and since the plastic sheet is bonded to the wooden sheet, the latter will maintain its structural stability and not present cracking or breaking in the face of deformations or manipulations like adaptations to certain surfaces, provided they do not affect the bonding between the plastic and the wood.

The sheet of plastic employed in combination with the wooden sheet, can be made of smooth plastic or of porous plastic.

Therefore, and as previously mentioned, due to having a plastic sheet glued to a wooden sheet, the wooden sheet is prevented from splintering, also if the shaped sheet is worked against the grain, the sheet of plastic assists in the bending of the laminated combined board achieving greater structural rigidity and preventing any warping.

The thickness of the plastic sheet can be variable from one tenth of a millimetre to about 3 mm. The thickness chosen will define the structural characteristics of the assembly insofar as its rigidity and malleability are concerned.

In the event that the thickness of the plastic sheet does not exceed two tenths of a millimetre, it is possible to bond said sheet to the wooden one by means of thermowelding, provided the thermowelding temperature does not exceed the temperature range of 130 -160° C, since otherwise the plastic would melt.

The mouldable laminated sheet of the invention, with the object that it can be glued and fixed to any type of shape that a surface could have, comes with an adhesive applied on the external face of the plastic sheet which can be suitably covered by a disposable paper.

Also, and as a direct consequence of the previous shaping, it is possible to form a laminated element wherein to the previous assembly formed by a wooden sheet and a plastic one, an additional wooden sheet or one of organic material like paper, is glued to the free side of the plastic sheet, thereby allowing the forming of a laminated board which has the aforementioned qualities, whereby an aesthetic effect is also achieved on both sides, for example in the formation of boxes, where both the interior and the exterior are important aesthetically speaking.

### DESCRIPTION OF THE DRAWINGS.

The present descriptive specification is completed with a set of drawings, illustrating the preferred embodiment the invention in a non-restrictive way.

Figure 1 shows the cross section of a board consisting of a single material subjected to bending and with damage on its outer face.

Figure 2 shows the profile of a board of one of the preferred embodiments of the invention.

Figure 3 shows the profile of the previous board with adhesive on the external face of plastic.

Figure 4 shows the profile of a board where additionally another sheet of wood or of organic material has been added.

### PREFERRED EMBODIMENT OF THE INVENTION.

The present invention consists of a mouldable laminated board comprising at least two sheets, one wooden and another of plastic, glued to each other.

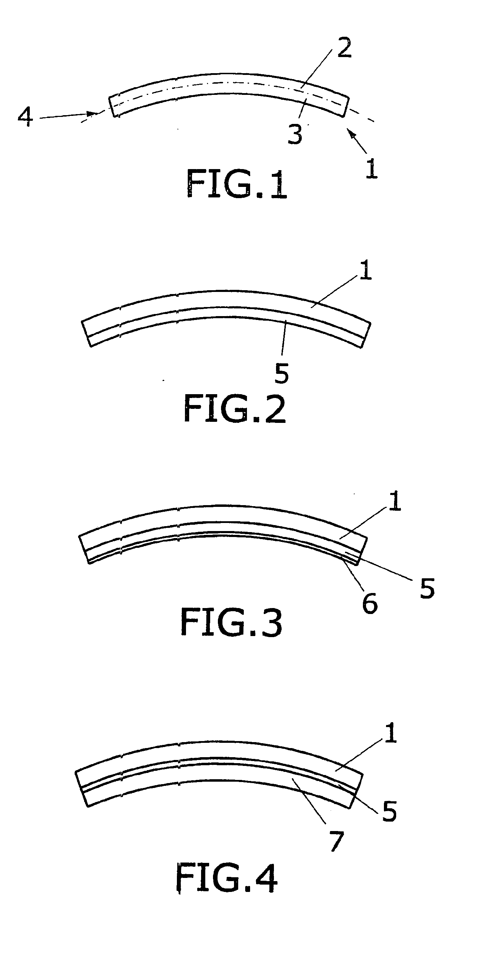

Figure 1 illustrates a classic problem of bending a board (1), for example of wood. In the figure the neutral line (4) is represented during flexion and how the fibres (2) that are above the neutral line (4) are subjected to traction, while the fibres (3) that are below the neutral line are subjected to compression. If the modulus of elasticity of these materials is surpassed, cracking and breaking of the same occur.

With the object of improving the structural stability and manipulation thereof, it can be observed in figure 2, how a plastic sheet (5) has been applied by gluing. The adherence of the plastic sheet (5) to the wooden one (1), is achieved by conventional means, it also being possible to carry out by means of thermowelding provided the thickness of the plastic sheet does not exceed 0.2 mm, as long as the thermowelding temperature does not exceed 130° to 160° C, since otherwise it would melt the plastic.

Depending on the structural characteristics that it is desired to achieve in the laminated board obtained, the thickness given to the plastic sheet can be varied, from 0.1 mm to 3 mm.

In figure 3, it is observed how additionally to the sheet of figure 2, an adhesive layer (6) has been added which favours the bonding thereof to ceilings and surfaces and which for the purpose of conserving its adherence can be covered with a protective material.

In figure 3, another possibility is shown based on the bonding between a wooden sheet and another of plastic, whereon additionally another sheet of wood or organic material like paper is adhered, for the purpose of providing a wood-like appearance on both faces and having the structural benefits conferred by the plastic.

Diverse experiments have been carried out with variations in the thickness of each of the layers. The values which gave best results are those given in the following table:

| **Material** | **Minimum thickness** | **Maximum thickness** |
|---|---|---|
| Wood (1) | 0.1 mm | 0.8 mm |
| Plastic sheet (5) | 0.1 mm | 3 mm |

Since the strengthening function is mainly consigned to the plastic sheet, the main damage which invalidates the use of the plastic is that established in the wooden sheet with the appearance of visible cracks.

An excessive shearing force can lead to localised damage in the plastic sheet, even to the separation thereof, however this damage does not affect the visual appearance and it allows it to continue being useful.

The possibility of making use of sheets of reduced thickness allows offset printing on the wooden face (9), cheaper than screen-printing.

Moreover the presence of the plastic sheet impedes the passage of dampness protecting the wood which serves to furnish a warm finish and a quality appearance.

The essential nature of this invention is not altered by variations in materials, form, size and arrangement of the component elements, described in a non-restrictive manner, sufficient for an expert to proceed to the reproduction thereof.

## Claims

1. Mouldable laminated board, of among the laminated boards comprising sheets of different materials for decorative purposes, **characterised in that** the board comprises a wooden external sheet (1), another sheet of plastic (5) glued to each other; and, in which the thickness of each of them varies in the ranges:
| **Material** | **Minimum thickness** | **Maximum thickness** |
|---|---|---|
| Wood (9) | 0.1 mm | 0.8 mm |
| Plastic sheet (8) | 0.1 mm | 3 mm |

2. Mouldable laminated board, of among the laminated boards comprising sheets of different materials for decorative purposes, **characterised in that** the board comprises a wooden external sheet (1), another sheet of plastic (5) glued to each other; the face of the plastic sheet not glued to the plastic sheet, having an adhesive for the purpose of favouring its fastening on all types of surface and, where the thickness of each of them varies in the ranges:
| **Material** | **Minimum thickness** | **Maximum thickness** |
|---|---|---|
| Wood (9) | 0.1 mm | 0.8 mm |
| Plastic lamina (8) | 0.1 mm | 3 mm |

3. Mouldable laminated board, of among the laminated boards comprising sheets of different materials for decorative purposes, **characterised in that** the board comprises two wooden external sheets (1) and (7) between which is mounted an intermediate plastic sheet (5) glued to both wooden sheets; where the additional sheet (7) can be of organic material like paper, and where the thickness of each of them varies in the ranges:
| **Material** | **Minimum thickness** | **Maximum thickness** |
|---|---|---|
| Wood (9) | 0.1 mm | 0.8 mm |
| Plastic sheet (8) | 0.1 mm | 3 mm |

4. Mouldable laminated board, according to claim 1 or 2 or 3, **characterised in that** the plastic sheet (5) is a smooth or fibred (porous) plastic.

5. Mouldable laminated board according to claim 1 or 2 or 3 **characterised in that** it is printed on the wooden face (1) by means of offset.

6. Mouldable laminated board according to claim 1 or 2 or 3, **characterised in that** in the event that the plastic sheet has a thickness not greater than 0.2 mm the bonding is possible between the plastic sheet and the wooden one by means of thermowelding, and also wherein the temperature of the thermowelding does not exceed the range of 130 to 160° C.
